# FASCICULE DE BREVET EUROPEEN

(11) **EP 2 521 698 B1**
(45) Date de publication et mention de la délivrance du brevet: **08.07.2020**
(21) Numéro de dépôt: 10801661.9
(22) Date de dépôt: 13.12.2010
(51) Int. Cl.: C03C 3/089, C03C 3/091, C03C 8/02, C03C 8/14

(54) **COMPOSITION D'EMAIL POUR VITROCERAMIQUE**
EMAILZUSAMMENSETZUNG FÜR KERAMIKGLAS
ENAMEL COMPOSITION FOR CERAMIC GLASS

(30) Priorité: 05.01.2010 FR 1050031
(43) Date de publication de la demande: 14.11.2012
(73) Titulaire: Eurokera S.N.C., 02400 Château-Thierry (FR)
(72) Inventeur: CHOPINET, Marie-Hélène, F-75018 Paris (FR); HILLERS, Maike, F-75013 Paris (FR); FAILLAT, Caroline, F-02400 Belleau (FR); VILATO, Pablo, F-75014 Paris (FR)
(74) Mandataire: Saint-Gobain Recherche
(86) Numéro de dépôt international: PCT/FR2010/052683
(87) Numéro de publication internationale: WO 2011/083231

(56) Documents cités:
- EP-A1- 0 460 863
- EP-A1- 0 771 765
- JP-A- 2002 255 584
- US-A- 5 326 728

## Description

La présente invention concerne une composition d'émail à forte teneur en oxyde de bore, destinée à recouvrir en particulier une vitre d'insert de cheminée ; la présente invention concerne aussi un procédé d'application d'un tel émail sur un substrat verrier par sérigraphie et une plaque de vitrocéramique recouverte d'un tel émail.

Les cheminées avec insert permettent d'atteindre des performances thermiques bien supérieures aux cheminées classiques à foyer ouvert. Ces cheminées avec panneau vitré connaissent actuellement un fort développement et les fabricants sont à la recherche de nombreuses solutions esthétiques pour permettre d'intégrer harmonieusement les différents modèles dans les habitations. Les inserts sont faits de préférence avec des verres à faible coefficient de dilatation thermique, il s'agit idéalement de plaque de vitrocéramique de type LiO₂-Al₂O₃-SiO₂ (communément appelée sous le nom LAS), dont le coefficient de dilatation est globalement nul ou très faible (la valeur absolue du coefficient de dilatation est typiquement inférieure ou égale à 15.10⁻⁷/K, voire 5.10⁻⁷/K).

Une solution retenue afin d'intégrer au mieux les inserts dans le décor, est de les recouvrir, en tout ou partie, par un émail de faible épaisseur. L'émail peut avantageusement servir à masquer des éléments, tels que des joints de silicone destinés à assembler diverses pièces sur les panneaux d'inserts. Il peut aussi servir à simuler un effet d'écran de téléviseur lorsqu'il dessine un cadre en recouvrant, par exemple, les bords d'un panneau d'insert en façade d'une cheminée.

Les émaux connus de l'état de la technique sont inappropriés pour une telle utilisation sur vitrocéramique, par ce qu'ils contiennent des métaux toxiques, tel que l'oxyde de plomb PbO, et/ou par ce qu'ils ne présentent pas une opacité ou une couleur convenable pour produire l'effet esthétique recherché. Idéalement, pour une telle application sur vitre d'insert de cheminée, on cherche à avoir un émail noir opaque, de préférence avec de bonnes propriétés optiques notamment en terme d'opacité (mesurée par transmission lumineuse TLD65 ou d'écart de couleur ΔE*), et de couleur (mesurée par mesure de la couleur CIELAB). Par ailleurs, l'émail doit également pouvoir être déposé facilement, en particulier par nappage, tout en permettant d'obtenir une couche mince, avantageusement de 1 à 6 microns, sans tressaillement (craquèlements). Les émaux doivent comprendre une fritte de verre compatible notamment avec un dépôt de très faible épaisseur, et qui puisse permettre une teneur en pigment(s) dans l'émail compatible avec l'application recherchée, de telle sorte, que la différence des coefficients de dilatation entre, d'une part, l'ensemble comprenant le mélange fritte/pigment(s), et, d'autre part, la vitrocéramique, ne provoque pas l'éclatement de l'émail.

Le brevet EP 0776867 concerne des compositions d'émail pour vitrocéramique, avec de l'oxyde de Baryum BaO. Une teneur minimale de 2% en BaO est indispensable dans les compositions de ce brevet pour garder une bonne fluidité du verre. Les compositions de ce brevet comprennent également des teneurs en SiO₂ supérieures à 57% afin d'éviter des risques de détériorations par des agents acides. La teneur en B₂O₃ est faible, inférieure à 22%, pour éviter des valeurs de coefficient de dilatation trop élevées dans le système en question.

Le brevet US 2009/0155585 concerne notamment des compositions d'émail, pour plaque de vitrocéramique. Les compositions d'émail de ce brevet comprennent des teneurs élevées en SiO₂, au moins 70%, pour garder des frittes de verre suffisamment stables. Les compositions doivent avoir une teneur en B₂O₃ inférieure à 22% pour garder une résistance aux agents chimiques admissible (voir passage [0034], page 3 de US 2009/0155585). Dans la pratique, les exemples de ce brevet comprennent tous des teneurs en B₂O₃ inférieures à 18%.

De plus, EP 0771765, JP 2002/255584, US 5326728 et EP 0460863 décrivent des compositions d'émail.

La présente invention a pour objet, une composition d'émail, en particulier destinée à recouvrir une vitre d'insert de cheminée, comprenant au moins une fritte de verre, au moins un pigment dans une teneur variant de 40 à 65 % du poids total de l'émail, de préférence de 45 à 60 %, et éventuellement au moins un véhicule ou médium, caractérisé en ce que la fritte de verre comprend les constituants suivants dans les limites selon les revendications 1 et 4.

Les inventeurs ont mis en évidence qu'une telle composition, avec notamment des teneurs en B₂O₃ variant de 23 à 55 % du poids total de la fritte, présente un coefficient de dilatation thermique bas ce qui limite l'impact dû à la différence des coefficients de dilatation entre le substrat, de préférence une plaque de vitrocéramique, et l'émail. Un tel émail permet d'incorporer une quantité de pigment compatible avec l'effet de masquage recherché, de préférence pour un nappage d'une épaisseur de 1 à 6 micron, sans tressaillement ni désagrégation de l'émail déposé sur le substrat verrier. Les inventeurs ont également montré que la viscosité d'une telle composition d'émail est adaptée à la gamme de température 750-850°C retenue pour le traitement thermique de l'émail. Une telle viscosité assure également une bonne tenue mécanique de la couche, et permet un bon étalement assurant un aspect relativement brillant et lisse de l'émail dans le produit final. L'aspect visuel obtenu est entièrement satisfaisant, étant donné que l'on obtient un émail brillant. De plus, les tests de vieillissement, évaluée notamment par des tests tribologiques, ont montrés une bonne résistance mécanique de l'émail selon la présente invention.

Ainsi, les inventeurs ont montré qu'utiliser une fritte de verre ayant la composition définie ci-dessus est particulièrement adaptée pour obtenir un émail opaque destiné en particulier à être déposé sur la face feu d'un insert de cheminée.

Les émaux selon la présente invention présentent notamment l'avantage de pouvoir être déposés sur un verre précurseur (ou verre-mère) avant céramisation et de pouvoir être cuits lors de la céramisation, et présentent également l'avantage de pouvoir résister à des hautes températures (permettant notamment l'usage dans un foyer de cheminée).

De préférence, la fritte de verre de la composition d'émail tel que décrit précédemment comprend une teneur en SiO₂ qui varie de 47 à 57 %.

De manière préférée, la fritte de verre de la composition pour fritte d'émail tel que décrit précédemment comprend une teneur en Al₂O₃ qui varie de 2 à 8 %, avantageusement de 3 à 6 %.

De manière préférée, la fritte de verre de la composition d'émail tel que décrit précédemment comprend une teneur en B₂O₃ qui varie de 27 à 50 %, avantageusement de 27 à 40 %, Les compositions décrites ci-dessus peuvent comprendre avantageusement une teneur en B₂O₃ qui est supérieure à 30, de préférence 31 %, voire même 32 %. De préférence, la teneur en en B₂O₃ dans la fritte de verre de l'émail selon la présente invention est supérieure à 33 % et avantageusement, elle est supérieure à 34 %. De manière préférée, la teneur en B₂O₃ est supérieure à 34 % et elle est inférieure à 45% dans la fritte de verre de l'invention.

De manière préférée, la fritte de verre de la composition d'émail tel que décrit précédemment comprend une teneur en Na₂O qui varie de 2,5 à 6 %, avantageusement de 2 à 5 %.

De manière préférée, la fritte de verre de la composition d'émail tel que décrit précédemment comprend une teneur en K₂O qui varie de 0,5 à 3%, avantageusement de 1 à 2 %.

De manière préférée, la fritte de verre de la composition d'émail tel que décrit précédemment comprend une teneur en Li₂O qui varie de 2 à 6%, avantageusement de 3 à 5 %.

De préférence encore, la composition d'émail tel que décrit précédemment ne contient pas au moins l'un des éléments sélectionné parmi du ZrO₂, BaO, MgO, CaO et SrO : les inventeurs ont constaté que les compositions d'émaux selon l'invention exemptes de ces oxydes ont des propriétés physico-chimique compatibles pour l'application recherchée, notamment une bonne viscosité. Avantageusement, les compositions sans BaO ne nécessitent pas de manipuler cet oxyde, dont le risque chimique lié à son utilisation est bien établi (fiche INRS FT 125). La composition de fritte selon la présente invention peut ne contenir aucun de ces quatre oxydes.

De préférence, lorsque l'émail comprend du TiO₂, sa teneur pondérale dans l'émail ne dépasse pas 5%, avantageusement elle est inférieure à 2%, voir même elle est inférieure à 1%.

Toutes les combinaisons possibles des constituants précités font également partie de la présente invention.

De manière préférée, la fritte de verre de la composition d'émail tel que décrit précédemment est exclusivement constituée de :

| | |
|---|---|
| SiO₂ | 45 - 65 % |
| Al₂O₃ | 0 - 13 %, de préférence 2 - 8 % |
| B₂O₃ | 23 - 55 % |
| Na₂O | 0 - 10 %, de préférence 2.5 - 6 % |
| K₂O | 0 - 10 %, de préférence 0.5 - 3 % |
| Li₂O | 0 - 10 %, de préférence 2 - 6 % |

De manière avantageuse, la composition décrite ci-dessus qui ne peut contenir que les six oxydes, comprend une teneur en SiO₂ qui varie de 47 à 57 %.

De manière avantageuse, la composition décrite ci-dessus qui ne peut contenir que les six oxydes, comprend une teneur en B₂O₃ qui varie de 27 à 50 %, avantageusement de 27 à 40 %. Les compositions décrites ci-dessus peuvent comprendre avantageusement une teneur en B₂O₃ qui est supérieure à 30 %, de préférence 31 %, voire même 32 %.

De manière avantageuse, la composition décrite ci-dessus qui est composée uniquement des six oxydes peut comprendre du Al₂O₃ dans une teneur variant de 3 à 6 %, du Na₂O dans une teneur variant de 2 à 5 %, du K₂O dans une teneur variant de 1 à 2 %, et/ou du Li₂O dans une teneur variant de 3 à 5 %.

Toutes les combinaisons possibles des constituants précités font également partie de la présente invention.

De manière encore plus préférée, la fritte de verre de la composition d'émail tel que décrit précédemment est exclusivement constituée de :

| | |
|---|---|
| SiO₂ | 47 - 57 % |
| Al₂O₃ | 3 - 6 % |
| B₂O₃ | 27 - 40 % |
| Na₂O | 2 - 5 % |
| K₂O | 1 - 2 % |
| Li₂O | 3 - 5 % |

De préférence, la fritte de verre et le(s) pigment(s) de la composition d'émail telle que décrit précédemment comprend des particules de granulométrie variant de 1 à 6 microns : un tel émail, avec des particules de pigment dont la teneur varie de 40 à 65 % en pourcentage massique, de préférence de 45 à 60 % (comme vu précédemment), permet d'obtenir une opacité suffisante sans devoir poser une épaisseur trop importante. On limite ainsi l'impact de la différence de coefficient de dilatation entre le substrat et l'émail, ce qui contribue à éviter le tressaillement.

Le « tressaillement » est un phénomène qui consiste en un craquellement de la couche d'émail lors de son refroidissement.

Avantageusement le rapport entre les deux types de particules, c'est à dire (% de fritte)/(% de pigment), est de 50/50. Autrement dit, les teneurs (pondérales) relatives de fritte et de pigment sont de 50 % chacune, ce qui permet d'assurer un enrobage optimum des particules d'émail compte tenu du taux de « vide » existant dans un empilement aléatoire de grain (environ 40%) tout en assurant l'opacité.

L'émail selon l'invention comprend de préférence au moins un pigment noir opaque. Avantageusement, on peut utiliser des pigments noirs opaques commerciaux comprenant soit des oxydes de chrome, de fer, de cobalt et de nickel (par exemple, spinelles Co-Cr-Fe-Ni tel que le pigment noir commercialisé par la société Ferro™ sous la référence 240137), soit des oxydes de chrome et de cuivre (par exemple, spinelles Cr-Cu).

On peut également citer les pigments noirs à base de MnO₂, Fe₂O₃ et/ou CoO,

On peut également citer d'autres pigments qui peuvent être utilisés, seuls ou en combinaison, dans la composition d'émail selon l'invention, à base de : NiO (vert), Cr₂O₃ (vert), TiO₂ (blanc), et/ou des oxydes comme le spinelle Cr-AI (rose), le rutile Sn-Sb-V (gris), le rutile Ti-Sb-Ni (jaune), le baddeleyite Zr-V (jaune), le spinelle Co-Zn-Al (bleu), le spinelle Zn-Fe-Cr (brun), et/ou des silicates comme le grenat Ca-Cr-Si (vert), le sphène Ca-Sn-Si-Cr (rose), le zircon Zr-Si-Fe (rose), le willémite Co-Zn-Si (bleu foncé), et/ou l'olivine Co-Si (bleu foncé).

Toutes les combinaisons de pigments précités dans l'émail selon l'invention sont également possibles. L'homme du métier du domaine des émaux sait comment incorporer de tels pigments dans l'émail lors de sa préparation.

La présente invention a aussi pour objet un procédé de sérigraphie pour appliquer un émail tel que décrit précédemment sur un substrat, tel qu'une plaque de vitrocéramique.

On procède au dépôt de, de préférence, une couche d'émail sur le substrat verrier afin d'obtenir à une épaisseur inférieure ou égale à 15 microns avant cuisson.

Avantageusement, le procédé de sérigraphie selon l'invention décrite précédemment se fait par dépôt de couches d'émail sur le substrat verrier, tel qu'une plaque de vitrocéramique, de manière à obtenir une épaisseur inférieure ou égale à 10 microns après cuisson, et de manière encore plus avantageuse afin d'obtenir une épaisseur inférieure ou égale à 6 microns après cuisson,

Les émaux selon la présente invention permettent le dépôt en aussi peu de passes que possible sur une faible épaisseur, ce qui permet d'éviter que l'émail s'écaille et endommage mécaniquement la plaque vitrocéramique.

Le substrat, de préférence une plaque de vitrocéramique, est revêtue par sérigraphie sur sa face supérieure avec une pâte comprenant la composition d'émail conforme à l'invention (la pâte d'émail comprend, outre la poudre composée de fritte et de pigments, un médium à base de résine acrylique et d'huile de pin commercialisé sous la référence MX54 par la société Ferro en vue de son dépôt sur le substrat, ledit médium se consumant au plus tard lors de la cuisson de l'émail) à l'aide d'écrans de sérigraphie composés de tissus de fils en polyester ou polyamide, soit avant céramisation, soit après céramisation, puis séchées aux alentours de 100-150°C.

La présente invention a encore pour objet une plaque de vitrocéramique recouverte d'un émail tel que décrit précédemment.

Avantageusement, le substrat, en particulier la plaque vitrocéramique, revêtu de l'émail (obtenu après cuisson) selon l'invention présente une opacité telle qu'elle permet notamment le masquage d'éléments sous-jacents. L'opacité est évaluée dans le cadre de la présente invention en mesurant (colorimétrie en réflexion effectuée à l'aide d'un colorimètre Byk-Gardner Color Guide 45/0) la variation de couleur ΔE*, correspondant à la différence entre la couleur, mesurée sur la face du substrat opposée à la face portant l'émail, pour le substrat posé sur fond blanc opaque et celle pour le substrat posé sur fond noir opaque (ΔE* = ((L_{B}*-L_{N}*)² + (a_{B}*-a_{N}*)² + (b_{B}*-b_{N}*)²)^{½} selon la formule établie en 1976 par la CIE, L_{B}*,a_{B}*,b_{B}* étant les coordonnées colorimétriques de la première mesure sur fond blanc et L_{N}*,a_{N}*,b_{N}* étant celles de la seconde mesure sur fond noir). Avantageusement, le substrat vitrocéramique revêtu de l'émail selon l'invention présente une valeur de ΔE* inférieure ou égale à 0.5, de préférence inférieure ou égale à 0.4.

De préférence, la plaque de vitrocéramique recouverte d'un émail tel que décrit précédemment est un insert de cheminée. Avantageusement la face portant l'émail est prévue pour être placée côté feu.

D'autres tests colorimétriques, effectués avec le même appareillage que cité ci-dessus, et sur la face émail de la plaque de vitrocéramique recouverte de l'émail selon la présente invention, ont permis de mesurer les cordonnées L*, a* et b* correspondantes. Avantageusement, pour l'application recherchée la valeur de L* mesurée doit être inférieure à 25, voire 21, et de préférence L* doit être compris entre 12 et 18. De telles valeurs de L* traduisent une absence de porosité de l'émail sur le substrat verrier.

La présente invention et ses avantages seront mieux compris à la lecture des exemples qui suivent, uniquement donnés à titre illustratif et qui ne peuvent en aucun cas être considérés comme limitatifs.

### EXEMPLES :

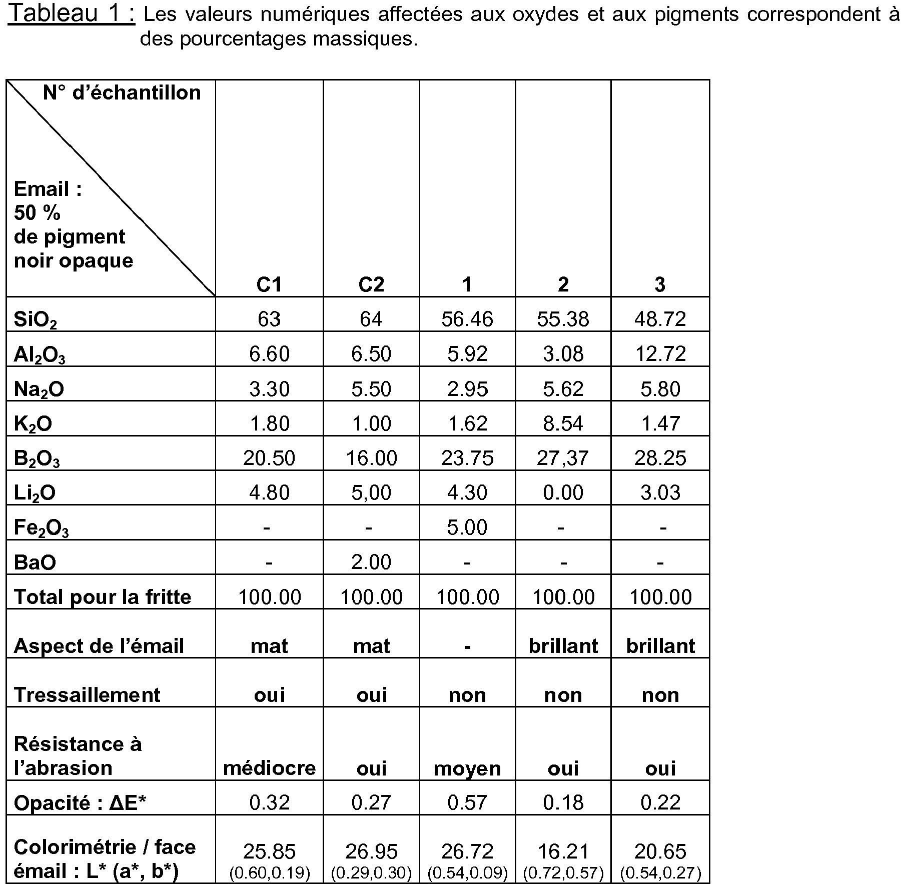

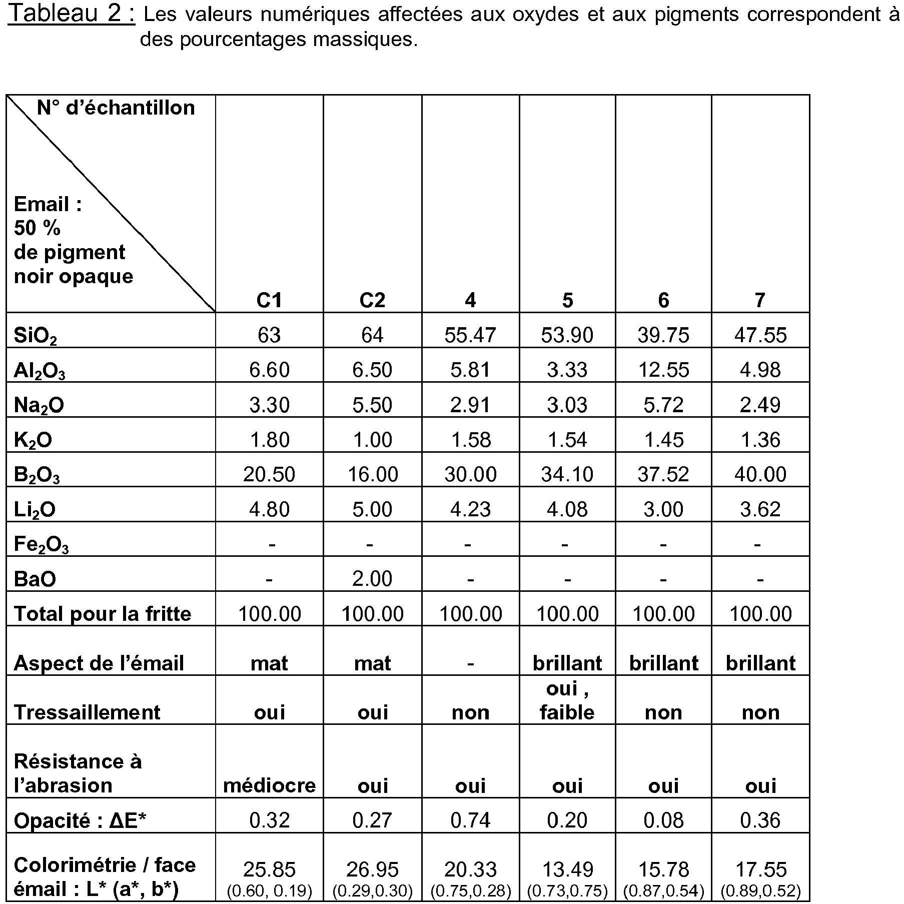

Les tableaux 1 et 2 donnent des résultats de tests comparatifs entre des compositions d'émaux selon l'invention déposés par sérigraphie sur une plaque de vitrocéramique, correspondants respectivement aux échantillons 1 à 7, et, des composition d'émaux déposés sur vitrocéramique de la même manière, et obtenues à partir de fritte de verre de l'état de la technique, correspondants respectivement aux échantillons C1 et C2 (les résultats obtenus sur les échantillons C1 et C2 à partir de fritte de l'état de la technique ont été reportés dans les deux tableaux).

Les différents échantillons dont les numéros correspondent aux compositions reportées dans les tableaux 1 et 2 ont été préparés comme suit :
La fritte, comprenant les oxydes reportés dans les tableaux 1 ou 2, est classiquement obtenue par fusion à haute température (plus de 1000°C) d'un mélange de matières premières (naturelles ou synthétiques) appropriées, puis, elle est broyée à l'aide d'un broyeur à boulet afin d'obtenir une granulométrie de 8 à 12 microns. On incorpore les pigments pour obtenir un ratio des masses fritte/pigment = 1. Les pigments utilisés dans tous les cas sont les pigments commerciaux spinelles Co-Cr-Fe-Ni et spinelles Cr-Cu (ils ont tous deux donnés des résultats identiques reportés dans le tableau 1). L'ensemble est ensuite microbroyé pour obtenir des grains d'une granulométrie variant de 5 à 6 microns.

On procède ensuite à un empâtage de la poudre obtenue dans le medium Ferro MX54 (la quantité de medium varie de 40 à 60 % du poids total du mélange). Puis, sur une plaque de vitrocéramique transparente, on dépose par sérigraphie une épaisseur de 10 à 15 microns de la patte obtenue lors de l'empattage. L'ensemble est cuit à une température de 800 °C pendant une durée d'une demi-heure à une heure. L'épaisseur de la couche d'émail obtenue après cuisson sur le substrat verrier varie entre 4 et 6 microns (seulement dans le cas de l'échantillon C2 on a obtenu une épaisseur de 8 microns après cuisson).

Des tests tribologiques et colorimétrique ont été effectués. Pour les tests tribologiques, la résistance à l'abrasion (voir tableaux 1 et 2) correspond au comportement de l'émail après 10 allers-retours effectués à l'aide d'un tampon fortement abrasif (tampon rouge de marque Spontex®) humidifié.

Les résultats obtenus sont reportés dans les tableaux 1 et 2. Les valeurs affectées aux oxydes sont exprimées en pourcentage massique par rapport à la composition totale de la fritte.

Dans tous les cas, tous les émaux selon l'invention testés, incorporant des frittes à forte teneur en oxyde de bore, ont montré un aspect brillant très satisfaisant pour l'application recherchée. A l'inverse, les émaux préparés selon le même protocole à partir de fritte de l'état de la technique sont mats.

Dans presque tous les cas, aucun tressaillement n'a été observé sur les émaux selon l'invention testés, préparés à partir des frittes à fortes teneurs en oxyde de bore (seul l'échantillon 7 a montré un tressaillement). A l'inverse, les émaux préparés selon le même protocole à partir de fritte de l'état de la technique ont montré un tressaillement.

Les résultats des tests à l'abrasion sont également satisfaisants sur l'ensemble des échantillons d'émaux selon l'invention évalués. Ils ont montrés une bonne tenue mécanique sur la plaque de vitrocéramique.

Concernant les résultats des tests colorimétriques, la valeur de L* qui permet de déterminer si on obtient un émail de porosité satisfaisante, a été mesurée côté émail (les valeurs des autres coordonnées colorimétriques a* et b* sont ajoutées à la suite entre parenthèses, à titre indicatif). Là encore, et tout comme les valeurs obtenus de ΔE* pour mesurer l'opacité, on obtient des résultats qui confirment l'adéquation entre les propriétés de l'émail selon l'invention et l'utilisation recherchée.

Des tests ont également été fait à partir de la fritte utilisée pour préparer l'échantillon 7, pour évaluer quels proportions relatives de fritte par rapport au pigment permettent d'obtenir un émail avec les propriétés optiques et mécaniques compatibles avec l'utilisation recherchée. L'émail est obtenu à partir de la fritte de l'échantillon 7 en suivant le protocole détaillé plus haut dans la partie expérimentale, et en utilisant le pigment noir spinelle Co-Cr-Fe-Ni commercialisé par la société Ferro™ sous la référence 240137. Le tableau 3 synthétise les résultats obtenus.

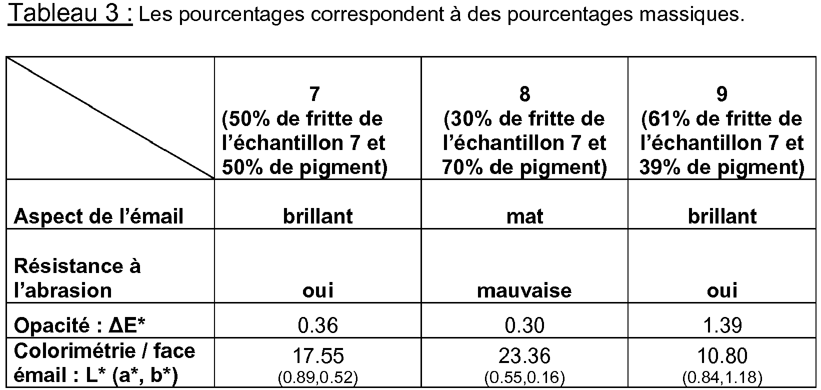

On constate qu'un fort taux de pigment, typiquement de l'ordre de 70% en poids par rapport à la fritte (échantillon 8), dégrade la résistance de l'émail à l'abrasion (10 allers-retours effectués à l'aide d'un tampon fortement abrasif humidifié identique à celui décrit ci-dessus). Un faible taux de pigment, typiquement inférieur à 40% en poids par rapport à la fritte (échantillon 9), conduit à un émail insuffisamment opaque puisque la valeur obtenue de ΔE* est bien supérieure à 0.5.

## Revendications

1. Composition d'émail, en particulier destinée à recouvrir une vitre d'insert de cheminée, comprenant au moins une fritte de verre, au moins un pigment dans une teneur variant de 40 à 65 % du poids total de l'émail, de préférence de 45 à 60 %, et éventuellement au moins un véhicule ou médium, **caractérisé en ce que** la fritte de verre comprend les constituants suivants dans les limites définies ci-après, bornes comprises, exprimées en pourcentages massiques du poids total de la fritte :
| | |
|---|---|
| SiO₂ | 45 - 65 % |
| Al₂O₃ | 0 - 13 % |
| B₂O₃ | 23 - 55 % |
| Na₂O | 0 - 10 % |
| K₂O | 0 - 10 % |
| Li₂O | 0 - 10 %, |
ladite fritte étant exempte de ZrO₂, de CaO et de BaO.

2. Composition d'émail selon la revendication 1, **caractérisée en ce que** la fritte de verre comprend une teneur en SiO₂ qui varie de 47 à 57 %.

3. Composition d'émail selon la revendication 1 ou 2, **caractérisée en ce que** la fritte de verre comprend une teneur en Al₂O₃ qui varie de 2 à 8 %, et de préférence 3 à 6 %.

4. Composition d'émail, en particulier destinée à recouvrir une vitre d'insert de cheminée, comprenant au moins une fritte de verre, au moins un pigment dans une teneur variant de 40 à 65 % du poids total de l'émail, de préférence de 45 à 60 %, et éventuellement au moins un véhicule ou médium, **caractérisé en ce que** la fritte de verre comprend les constituants suivants dans les limites définies ci-après, bornes comprises, exprimées en pourcentages massiques du poids total de la fritte :
| | |
|---|---|
| SiO₂ | 45 - 65 % |
| Al₂O₃ | 0 - 13 % |
| B₂O₃ | >30 - 55 % |
| Na₂O | 0 - 10 % |
| K₂O | 0 - 10 % |
| Li₂O | 0 - 10%. |

5. Composition d'émail selon l'une des revendications précédentes, **caractérisée en ce que** la fritte de verre comprend une teneur en Na₂O qui varie de 2,5 à 6 %, et de préférence de 2 à 5 %.

6. Composition d'émail selon l'une des revendications précédentes, **caractérisée en ce que** la fritte de verre comprend une teneur en K₂O qui varie de 0,5 à 3%, et de préférence de 1 à 2 %.

7. Composition d'émail selon l'une des revendications précédentes, **caractérisée en ce que** la fritte de verre comprend une teneur en Li₂O qui varie de 2 à 6%, et de préférence de 3 à 5 %.

8. Composition d'émail selon l'une des revendications précédentes, **caractérisée en ce que** la composition d'émail ne contient pas au moins l'un des éléments sélectionné parmi du ZrO₂, BaO, MgO, CaO et SrO.

9. Composition d'émail selon la revendication 1, **caractérisée en ce que** la fritte de verre est exclusivement constituée de :
| | |
|---|---|
| SiO₂ | 45 - 65 % |
| Al₂O₃ | 0 - 13 %, de préférence 2 - 8 % |
| B₂O₃ | 23 - 55 % |
| Na₂O | 0 - 10 %, de préférence 2.5 - 6 % |
| K₂O | 0 - 10 %, de préférence 0.5 - 3 % |
| Li₂O | 0 - 10 %, de préférence 2 - 6 %. |

10. Composition d'émail selon la revendication 9, **caractérisée en ce que** la fritte de verre est exclusivement constituée de :
| | |
|---|---|
| SiO₂ | 47 - 57 % |
| Al₂O₃ | 3 - 6 % |
| B₂O₃ | 27 - 40 % |
| Na₂O | 2 - 5 % |
| K₂O | 1 - 2 % |
| Li₂O | 3 - 5 %. |

11. Composition d'émail selon l'une des revendications précédentes, **caractérisée en ce que** la fritte de verre et le pigment comprennent des particules de granulométrie variant de 1 à 6 microns.

12. Composition d'émail selon l'une des revendications précédentes, **caractérisée en ce que** les teneurs relatives de fritte et de pigment sont de 50 % chacune.

13. Composition d'émail selon l'une des revendications précédentes, **caractérisé en ce que** ledit pigment est un pigment noir opaque.

14. Procédé de sérigraphie pour appliquer un émail de composition selon l'une quelconque des revendications précédentes sur un substrat verrier, tel qu'une plaque de vitrocéramique, de manière à obtenir une épaisseur inférieure ou égale à 10 microns après cuisson.

15. Plaque de vitrocéramique recouverte d'un émail de composition selon l'une quelconque des revendications 1 à 13.

16. Plaque de vitrocéramique selon la revendication 15, telle que ladite plaque de vitrocéramique est un insert de cheminée dont la face portant l'émail est prévue pour être placée côté feu.

## Patentansprüche

1. Glasurzusammensetzung, insbesondere zum Überziehen eines Kamineinsatzglases, umfassend mindestens eine Glasfritte, mindestens ein Pigment in einem Gehalt zwischen 40 und 65 % des Gesamtgewichts der Glasur, vorzugsweise von 45 bis 60 % und gegebenenfalls mindestens ein Vehikel oder Medium, **dadurch gekennzeichnet, dass** die Glasfritte die folgenden Bestandteile innerhalb der nachstehend definierten Grenzwerte einschließlich Grenzen umfasst, ausgedrückt in Massenprozenten des Gesamtgewichts der Fritte:
| | |
|---|---|
| SiO₂ | 45 - 65 % |
| Al₂O₃ | 0 - 13 % |
| B₂O₃ | 23 - 55 % |
| Na₂O | 0 - 10 % |
| K₂O | 0 - 10 % |
| Li₂O | 0 - 10 %, |
wobei die genannte Fritte frei von ZrO₂, CaO und BaO ist.

2. Glasurzusammensetzung nach Anspruch 1, **dadurch gekennzeichnet, dass** die Glasfritte einen SiO₂-Gehalt aufweist, der von 47 bis 57 % variiert.

3. Glasurzusammensetzung nach Anspruch 1 oder 2, **dadurch gekennzeichnet, dass** die Glasfritte einen Al₂O₃-Gehalt aufweist, der von 2 bis 8 %, und vorzugsweise 3 bis 6 % variiert.

4. Glasurzusammensetzung, insbesondere zum Überziehen eines Kamineinsatzglases, umfassend mindestens eine Glasfritte, mindestens ein Pigment in einem Gehalt zwischen 40 und 65 % des Gesamtgewichts der Glasur, vorzugsweise von 45 bis 60 % und gegebenenfalls mindestens ein Vehikel oder Medium, **dadurch gekennzeichnet, dass** die Glasfritte die folgenden Bestandteile innerhalb der nachstehend definierten Grenzwerte einschließlich Grenzen umfasst, ausgedrückt in Massenprozenten des Gesamtgewichts der Fritte:
| | |
|---|---|
| SiO₂ | 45 - 65 % |
| Al₂O₃ | 0 - 13 % |
| B₂O₃ | > 30 - 55 % |
| Na₂O | 0 - 10 % |
| K₂O | 0 - 10 % |
| Li₂O | 0 - 10 %. |

5. Glasurzusammensetzung nach einem der vorhergehenden Ansprüche, **dadurch gekennzeichnet, dass** die Glasfritte einen Na₂O-Gehalt aufweist, der von 2,5 bis 6 %, und vorzugsweise von 2 bis 5 % variiert.

6. Glasurzusammensetzung nach einem der vorhergehenden Ansprüche, **dadurch gekennzeichnet, dass** die Glasfritte einen K₂O-Gehalt aufweist, der von 0,5 bis 3 %, und vorzugsweise von 1 bis 2 % variiert.

7. Glasurzusammensetzung nach einem der vorhergehenden Ansprüche, **dadurch gekennzeichnet, dass** die Glasfritte einen Li₂O-Gehalt aufweist, der von 2 bis 6 %, und vorzugsweise von 3 bis 5 % variiert.

8. Glasurzusammensetzung nach einem der vorhergehenden Ansprüche, **dadurch gekennzeichnet, dass** die Glasurzusammensetzung nicht mindestens einen der aus ZrO₂, BaO, MgO, CaO und SrO ausgewählten Bestandteile enthält.

9. Glasurzusammensetzung nach Anspruch 1, **dadurch gekennzeichnet, dass** die Glasfritte ausschließlich besteht aus:
| | |
|---|---|
| SiO₂ | 45 - 65 % |
| Al₂O₃ | 0 - 13 %, vorzugsweise 2 - 8 % |
| B₂O₃ | 23 - 55 % |
| Na₂O | 0 - 10 %, vorzugsweise 2,5 - 6 % |
| K₂O | 0 - 10 %, vorzugsweise 0,5 - 3 % |
| Li₂O | 0 - 10 %, vorzugsweise 2 - 6 %. |

10. Glasurzusammensetzung nach Anspruch 9, **dadurch gekennzeichnet, dass** die Glasfritte ausschließlich besteht aus:
| | |
|---|---|
| SiO₂ | 47 - 57 % |
| Al₂O₃ | 3 - 6 % |
| B₂O₃ | 27 - 40 % |
| Na₂O | 2 - 5 % |
| K₂O | 1 - 2 % |
| Li₂O | 3 - 5 %. |

11. Glasurzusammensetzung nach einem der vorhergehenden Ansprüche, **dadurch gekennzeichnet, dass** die Glasfritte und das Pigment Partikel mit einer Korngrößenverteilung umfassen, die von 1 bis 6 Mikrometer variiert.

12. Glasurzusammensetzung nach einem der vorhergehenden Ansprüche, **dadurch gekennzeichnet, dass** der relative Gehalt an Fritte und Pigment jeweils 50 % beträgt.

13. Glasurzusammensetzung nach einem der vorhergehenden Ansprüche, **dadurch gekennzeichnet, dass** das genannte Pigment ein opakes Schwarzpigment ist.

14. Siebdruckverfahren zum Aufbringen einer Glasurzusammensetzung nach einem der vorhergehenden Ansprüche auf ein Glassubstrat, wie beispielsweise eine Glaskeramikplatte, um nach dem Brennen eine Dicke von weniger als oder gleich 10 Mikrometern zu erhalten.

15. Glaskeramikplatte, überzogen mit einer Glasurzusammensetzung nach einem der Ansprüche 1 bis 13.

16. Glaskeramikplatte nach Anspruch 15, wobei die genannte Glaskeramikplatte ein Kamineinsatz ist, dessen Seite, die die Glasur trägt, auf der Feuerseite positioniert werden soll.

## Claims

1. An enamel composition, in particular intended for covering a glass pane of a fireplace insert, comprising at least one glass frit, at least one pigment in a content varying from 40 to 65% of the total weight of the enamel, preferably from 45 to 60%, and optionally at least one vehicle or medium, **characterized in that** the glass frit comprises the following constituents, within the limits defined below, limits included, expressed as percentages by weight of the total weight of the frit:
| | |
|---|---|
| SiO₂ | 45-65% |
| Al₂O₃ | 0-13% |
| B₂O₃ | 23-55% |
| Na₂O | 0-10% |
| K₂O | 0-10% |
| Li₂O | 0-10% |
said frit not containing Zr0₂, CaO and BaO.

2. The enamel composition as claimed in claim 1, **characterized in that** the glass frit comprises an SiO₂ content that varies from 47 to 57%.

3. The enamel composition as claimed in claim 1 or 2, **characterized in that** the glass frit comprises an Al₂O₃ content that varies from 2 to 8%, and preferably 3 to 6%.

4. An enamel composition, in particular intended to cover a glass pane of a fireplace insert, comprising at least a glass frit, at least a pigment in an amount varying from 40% to 65% of the total weight of the enamel, preferably from 45 to 60%, and optionally at least a vehicle or medium, **characterized in that** the glass frit comprises the following constituents, within the limits defined below, limits included, expressed as percentages by weight of the total weight of the frit:
| | |
|---|---|
| SiO₂ | 45-65% |
| Al₂O₃ | 0-13% |
| B₂O₃ | >30-55% |
| Na₂O | 0-10% |
| K₂O | 0-10% |
| Li₂O | 0-10% |

5. The enamel composition as claimed in one of the preceding claims, **characterized in that** the glass frit comprises an Na₂O content that varies from 2.5 to 6%, and preferably from 2 to 5%.

6. The enamel composition as claimed in one of the preceding claims, **characterized in that** the glass frit comprises a K₂O content that varies from 0.5 to 3%, and preferably from 1 to 2%.

7. The enamel composition as claimed in one of the preceding claims, **characterized in that** the glass frit comprises an Li₂O content that varies from 2 to 6%, and preferably from 3 to 5%.

8. The enamel composition as claimed in one of the preceding claims, **characterized in that** the enamel composition does not contain at least one of the elements selected from ZrO₂, BaO, MgO, CaO and SrO.

9. The enamel composition as claimed in claim 1, **characterized in that** the glass frit is exclusively constituted of:
| | | |
|---|---|---|
| SiO₂ | 45-65% | |
| Al₂O₃ | 0-13%, | preferably 2-8% |
| B₂O₃ | 23-55% | |
| Na₂O | 0-10%, | preferably 2.5-6% |
| K₂O | 0-10%, | preferably 0.5-3% |
| Li₂O | 0-10%, | preferably 2-6%. |

10. The enamel composition as claimed in claim 9, **characterized in that** the glass frit is exclusively constituted of:
| | |
|---|---|
| SiO₂ | 47-57% |
| Al₂O₃ | 3-6% |
| B₂O₃ | 27-40% |
| Na₂O | 2-5% |
| K₂O | 1-2% |
| Li₂O | 3-5%. |

11. The enamel composition as claimed in one of the preceding claims, **characterized in that** the glass frit and the pigment comprise particles having a particle size that varies from 1 to 6 microns.

12. The enamel composition as claimed in one of the preceding claims, **characterized in that** the relative contents of frit and of pigment are 50% each.

13. The enamel composition as claimed in one of the preceding claims, **characterized in that** said pigment is an opaque black pigment.

14. A screen-printing process for applying an enamel having a composition as claimed in any one of the preceding claims to a glass substrate, such as a glass-ceramic plate, so as to obtain a thickness of less than or equal to 10 microns after firing.

15. A glass-ceramic plate covered with an enamel having a composition as claimed in any one of claims 1 to 13.

16. The glass-ceramic plate as claimed in claim 15, such that said glass-ceramic plate is a fireplace insert, the face of which that bears the enamel is intended to be placed on the fire side.
